# EUROPEAN PATENT APPLICATION

(11) **EP 2 838 271 A1**
(43) Date of publication of application: **18.02.2015**
(21) Application number: 13180424.7
(22) Date of filing: 14.08.2013
(51) Int. Cl.: H04N 21/41, H04N 21/482, H04N 21/658, H04N 21/278, H04N 21/2665, H04N 21/418

(54) **Television system**

(71) Applicant: TP Vision Holding B.V., 1097 JB Amsterdam (NL)
(72) Inventor: Shanmugasundaram, Hemakumar Kasala, 1097 JB Amsterdam (NL); Moorthy, Rama, 1097 JB Amsterdam (NL); Muijen, Maarten, 1097 JB Amsterdam (NL)
(74) Representative: Busch, Patrick

(57) **Abstract**

The invention relates to a television system (10, 100) comprising
- a processing unit (14, 114),
- a network unit (15, 115) for connecting to a digital network (20) such as the internet;
- an interface unit (12), such as a Common interface module, for connecting with a Conditional Access Module, CAM (13),

characterized in that the processing unit (14, 114) is configured to:
- receive search criteria from a user;
- receive a content portal (23) reference from the CAM (13);
- transmit the keywords and the content portal reference to a television, TV, portal (21) via the network (20);
- receive from the TV portal (21) search results, including at least one search result pertaining to content from the content portal (23) and at least one search result pertaining to content from a further content source (22);
- present the aggregated search results on a display (11, 111) of the television system (10, 100).
- in response to a selection by the user of the at least one search result pertaining to content from the content portal (23), retrieve the selected content by launching an application from the CAM (13).

## Description

### Field of the invention

The invention relates to a television system for retrieving content from a network, such as free-to-air content and PayTV content.

### Background of the invention

Recent studies of the behaviour of television viewers indicate that viewers are slowly but steadily migrating away from using Electronic Program Guides (EPGs) for selecting a channel or program to watch, and instead are starting to use search features to select their programming.

Nowadays, various search and recommendation systems are deployed by CE vendors. However, in practice the scope of these search and recommendation (S&R) systems is limited to the non-linear content provided by the CE vendors in addition to the regular broadcast services. The non-linear services from the PayTV operator are usually not accessible through the S&R system of the CE vendor. While the PayTV non-linear services may be searchable through a Common Interface (Plus) application from the PayTV operator, this presents the user with a separate search interface.

Therefore, there is a need for a search feature in or from a television that can search through a wider range of content providers, preferably both linear and non-linear.

### Summary of the invention

The invention provides a television system comprising
- a processing unit,
- a network unit for connecting to a digital network such as the internet;
- an interface unit, such as a Common Interface module, for connecting with a Conditional Access Module, CAM,
**characterized in that** the processing unit is configured to:
- receive search criteria from a user;
- receive a content portal reference;
- transmit the keywords and the content portal reference to a television, TV, portal via the network;
- receive from the TV portal aggregated search results, including at least one search result pertaining to content from the content portal;
- present the aggregated search results on a display of the television system .
- in response to a selection by the user of the at least one search result pertaining to content from the content portal, retrieve the selected content.

The television system thus makes it possible for a user to search two types of programs using a single user interface. For example, a user can search through both free-to-air programs using a TV portal and PayTV programming via a PayTV portal. In known systems, the user must use a separate application, provided by the PayTV operator, for searching PayTV content. The invention advantageously, unites both types of content searching in a single user interface. Moreover, the invention advantageously allows this user interface to be presented on the television and/or on a user device that effectively forms a part of the television system (for example a tablet computer running an application which causes the tablet to communicate with the television and the TV portal).

In an embodiment according the invention, retrieving the selected content comprises launching an application from the CAM for retrieving the selected content. Once the user has made a selection of desired content, this content can be rendered in the usual way. For example, PayTV content is obtained through an application of the CAM while free-to-air content may be obtained directly from a content server connected to the internet or through the TV portal.

In an embodiment according the invention, the processing unit is configured to receive the content portal reference from the CAM .The processing unit is then able to send the reference to the TV portal. The processing unit may be configured to receive the content portal reference from the CAM (13) via a Specific Application Support (SAS) resource.

In an embodiment according the invention, the processing device is configured to:
- in response to a selection by the user of a search result pertaining to a further content source, retrieve the selected content from the further content source.

The television system can be formed by a television (possibly including or a remote control), or it can comprise a television and a connected user device. In this case, the user device can comprise the processing unit which takes care of the above described functionality (possibly in cooperation with a processing unit in the television, for example when communication with the CAM is required).

The user device can be a portable device, such as a laptop computer, a tablet computer, or a mobile phone. Many consumers nowadays own such a device which can store and execute third party software applications (commonly called "apps"). It is therefore advantageous to provide a part of the user interface, in particular a part requiring inputs from the user, associated with watching television on said user device. The user device can be connected to the television using a variety of ways, for example via a WiFi network, an infrared connection, or Bluetooth. The application on the user device which implements the functionality according the invention may be provided by the television manufacturer.

In an embodiment according the invention, the user device is configured to connect to the TV for obtaining the content portal reference and for sending the selection by the user.

In an embodiment according the invention, the content portal is a PayTV portal. There can be multiple (PayTV) portals. Such portals are typically operated by the provider of the CAM.

The invention further provides a television, TV, portal configured to:
- receive from a television system, over a network, search criteria and a content portal reference;
- query the content portal using the search criteria;
- receive results from the content portal; and
- send the received results to the television system

In an embodiment according the invention, the TV portal is further configured to:
- query a further content source using the search criteria;
- receive further results from the further content source; and
- aggregate the further results and the results
- send the aggregated results to the television system

The invention further provides a user device, configured to connect with a television, the user device comprising
- a display;
- a network interface for connecting to a network;
- a processing unit,
wherein the processing unit is configured to
- receive from the television system a content portal reference;
- receive, from a user of the user device, search criteria;
- transmit the keywords and the content portal reference to a television, TV, portal via the network;
- receive from the TV portal aggregated search results, including at least one search result pertaining to content from the content portal;
- present the aggregated search results on the display; and
- in response to a selection by the user of the at least one search result pertaining to content from the content portal, send a reference to the selected content to the television.

The invention further provides a computer medium storing computer program instructions, which, when executed on a user device, cause the user device to function as described above.

### Brief description of the Figures

On the attached drawing sheets,
- figure 1 schematically shows a combination of a television and a conventional network infrastructure for delivering content;
- figure 2 schematically shows a combination of a television and a network infrastructure for delivering content according to an embodiment of the invention;
- figure 3 schematically shows a method for searching and retrieving content by a television according to an embodiment of the invention;
- figure 4 schematically shows a method for searching and sending content by a TV portal according to an embodiment of the invention;
- figure 5 schematically shows a method for searching and transmitting content in a system according to an embodiment of the invention;
- figure 6 schematically shows a system of a television and associated user device according to an embodiment of the invention; and
- figure 7 shows an alternative interaction between a CAM and a processing unit according to an embodiment of the invention.

### Detailed description

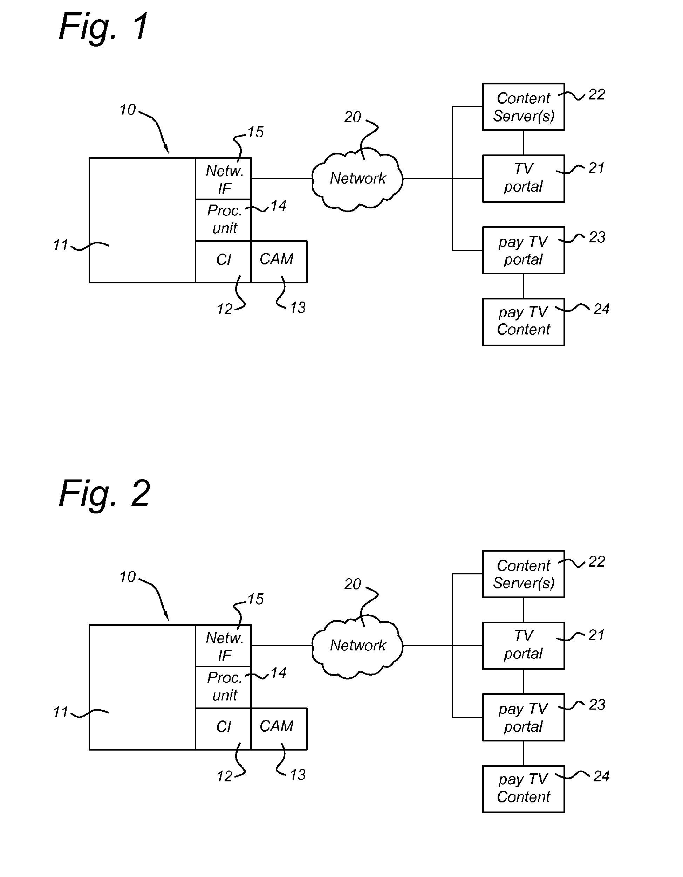

Figure 1 schematically shows schematically shows a combination of a television 10 and a conventional network infrastructure 20-24 for delivering content. The television 10 is provided with display 11 and an interface 12, typically a standardized Common Interface (CI) or Common Interface Plus (CI Plus), for interfacing with a Conditional Access Module (CAM) 13. The CAM is typically provided by a (payTV) network or cable operator and not by the television manufacturer.

The TV 10 further comprises a processing unit 14 and a network interface 15. The processing unit 14 can execute applications, which may be stored in internal or external memory of the TV. These applications are typically provided by the TV manufacturer as (updatable) firmware. It is also possible that the TV allows third party applications to be stored and executed. In addition, the TV 10 is able to retrieve an application from the CAM.

One of the standard applications is the manufacturer's S&R application. When run on the processing unit 14, the application can contact over network 20, for example the internet, a TV portal 21. The TV portal 21 can be a web server (i.e. configured to communicate with a client using a standard HTTP protocol) or a network server using a proprietary communication standard. The S&R application receives keywords from a user, and sends the keywords to the TV portal 21. The TV portal 21 will then search content server(s) 22 using the keywords. The content servers can provide free-to-air content, i.e. content that is freely available without payment or (paid) subscription. For example, a TV portal can provide access to the YouTube online video service. The TV portal can also provide limited availability content, for example, content that is made available after the user has made an (online) payment.

The TV portal will return, to the S&R application, a list of found content. The S&R application presents the list to the user of television 10, for example by displaying the list on display 11 of TV 10. The user can make a selection of content. The S&R application will then retrieve the selected content. This can be either done via the TV portal 21, or directly from a content server 22. The search results returned from the TV portal 21 will typically include the required URL (Uniform Resource Locator) for retrieving the found content.

If, on the other hand, the user wants to watch PayTV content, the user must launch a separate application. The application is typically provided by the cable or network operator, and there are various ways in which it may be started. The application may be stored on the CAM 13. Alternatively, instead of storing the application, the CAM may also provide a reference (URL) to the application, which is then loaded and executed by the television or CAM. In such an embodiment, the SAS resource can be used to send messages from the application to the CAM. Alternatively, AMMI (Application Man Machine Interface) can be used to start an application on the TV. The application is then provided by the CAM but may contain URLs that point to the internet. An AMMI app can also claim Remote Control keys, which are routed back to the CAM.

Once the application is running, the application will contact a PayTV portal 23 and return a list of available PayTV programs. The user can then make a selection. When a program is selected, the CAM application (or a further application launched by the CAM) will carry out the necessary transaction with the PayTV portal 23 and retrieve the content from the PayTV content server 24.

Figure 2 schematically shows a combination of a television and a network infrastructure for delivering content according to an embodiment of the invention. The embodiment of figure 2 shares some elements with the embodiment of figure 1, which elements in common will not be described again. The main difference lies in the functionality of the S&R application which runs on processing unit 14 of the TV 10 and the functionality of the TV portal 21.

The S&R application is now configured to not only retrieve keywords from a user, but also to obtain a link to a PayTV portal 23 from CAM 13. The S&R application can query CAM 13 via CI 12.

It should be noted that where reference is made to keywords, this indicates general search criteria data. For example, "keywords" can indicate a (part of a) word from a title or summary, a (part of a) name from an actor or other person involved in the content creation, a (part of a) genre name, etc. It is also not necessary that a user enters alphanumerical input - a user could also for example select a genre from a limited list.

The S&R application now sends both the keywords and the PayTV portal link to TV portal 21. The TV portal 21 will query both the content server(s) 22 and the PayTV portal 23 using the keywords, collect and aggregate the results, and send the aggregated results to the S&R application running on the processing unit 14 of the TV 10. The S&R application presents the aggregated results and allows a user to make a selection. Depending on the user selection, appropriate action is taken by the S&R application to retrieve and render the selected (e.g. free-to-air or PayTV) content.

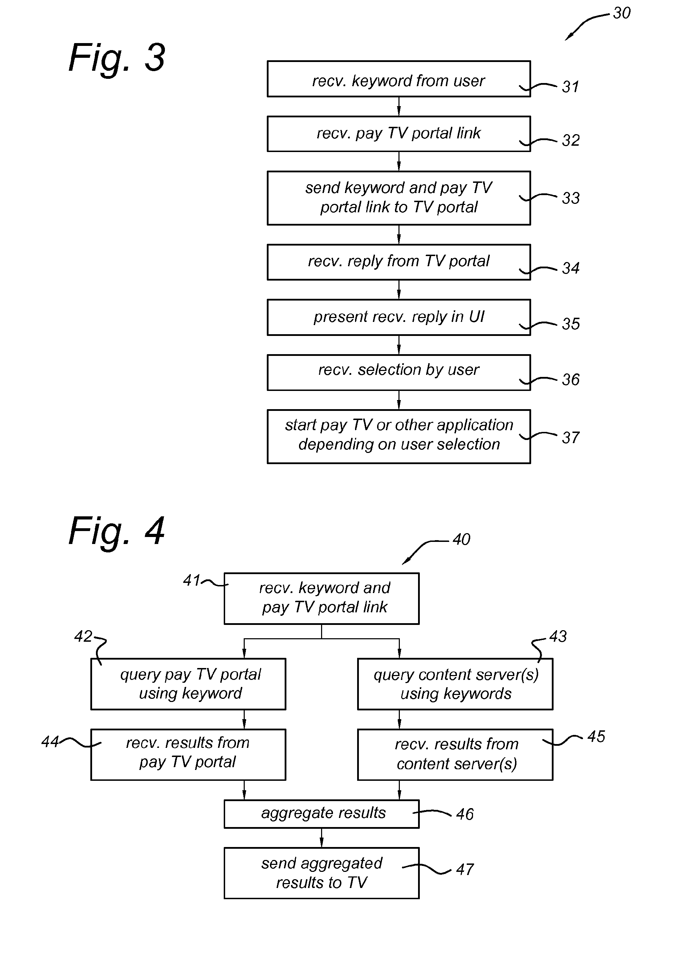

The functionality of a television (S&R application) according the invention will now be described in more detail in reference to figure 3. The functionality of a TV portal according the invention will then be described in more detail in reference to figure 4.

Figure 3 schematically shows a method 30 for searching and retrieving content by a television 10 according to an embodiment of the invention. The television executes, on its processing unit 14, a software application, for example a Search and Recommendation (S&R) application. Hereafter, the words "television" and "application" will be used interchangeably when describing the method actions.

In action 31, the television retrieves keywords (in general: content search criteria) from the user of the television 10. In action 32, the television retrieves a PayTV portal link. The PayTV portal link can for example be retrieved from a CAM. However, it is also possible that this link is obtained from the internet, for example by a server that responds to a query from the television and can determine a PayTV portal link from an internet address, geographic location, or details of the CAM provided by the television 10.

In action 33, the keywords and the PayTV portal link are sent to the TV portal by the television. The television will then stand by for search results from the TV portal 21, which are received in action 34.

In action 35, the television 10 will interpret the received search results and present them to the user. In an embodiment, the television displays the origin of the search results together with the search results. For example, it can indicate whether a result is a free-to-air program or PayTV content. It may display a price of PayTV content. The television will store details required for accessing the content, such as an URL of a content server, PayTV program details, or the details (e.g. a URL) for a CAM application for accessing the associated content.

The user can select a program from the presented list in action 36. As a result, in action 37, the television will take appropriate actions to display the selected content. In case of free-to-air content (available via TV portal 21 and/or content servers 22), the S&R application will function as usual by retrieving the content and providing the content to the television's signal processing hardware for display.

If, on the other hand, the user selects PayTV content, the television will take the required action for retrieving and displaying the PayTV content. This can comprise launching a CAM application and providing the CAM application with details of the selected content. The CAM application will then contact PayTV portal 23 and/or PayTV content server(s) 24 to complete the transaction (e.g. process payment) and to obtain the selected content. The content will then be provided to the television's signal processing hardware for display.

Figure 4 schematically shows a method 40 for searching and sending content by a TV portal 21 according to an embodiment of the invention. In action 41, the TV portal 21 receives one or more keywords (in general: search criteria) and a link to a PayTV portal 23 from a television 10 via a network 20. The link to a PayTV portal can be any data necessary for contacting the portal, for example a URL.

Actions 42 and 43 may be executed in parallel or sequentially. In action 42, the TV portal sends a query using the received keywords to the PayTV portal referenced by the received PayTV portal link. In action 43, the PayTV portal queries other (e.g. free-to-air or freely available internet sources) content sources using the keywords. The results from the PayTV query are received in action 44, and the results from the other sources are received in action 45.

In action 46, the TV portal 21 aggregates the received results from all sources. Care is taken to retain data necessary to obtain the relevant content for each search result. This data can include URLs and/or PayTV content identifiers. The TV portal may provide the retrieved results with additional data from a further database (e.g. add a picture based on a movie poster, or a logo of a content source). The aggregated results are send to the television in action 47.

It will be clear to the skilled person that the queries for the various content sources can be executed in parallel or in arbitrary sequential order. Furthermore, it will be clear that any number of content sources of either type (PayTV or other type) can be queried.

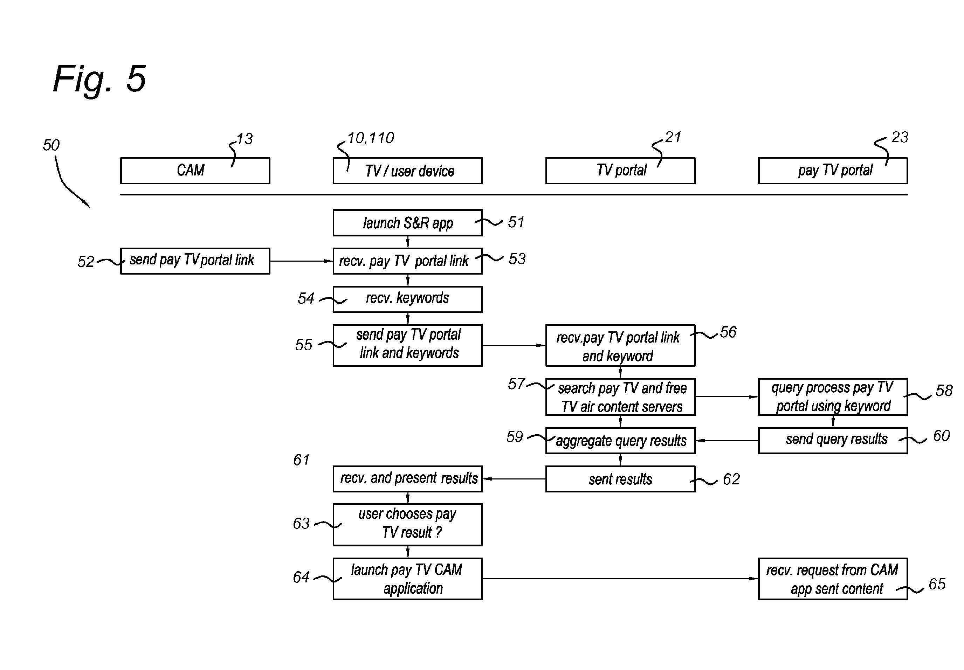

Figure 5 schematically shows a method 50 for searching and transmitting content in a system according to an embodiment of the invention. The system comprises the CAM 13, connected to television 10, and the TV portal 21. Also shown is the Pay TV portal 23, while the content servers 22 and 24 are omitted for brevity.

The further details as provided in reference to figures 3 (actions by the television 10) and figure 4 (actions by the TV portal 21) also apply to the corresponding actions in figure 5.

The television launches S&R application in action 51. The application retrieves from the CAM 13 a data including a reference (such as a link or URL) to a PayTV portal (actions 52, 53). A user inputs search criteria using a User Interface (UI) of the S&R application in action 54. The search criteria and PayTV portal data are sent to the TV portal 21 in action 55.

The TV portal 21 receives the PayTV portal data and the search criteria (action 56). The TV portal queries the Pay TV portal (referenced by the received PayTV portal reference data) with the received search criteria (action 57). The PayTV portal 23, in action 58, processes the query and sends query results back to the TV portal (action 60). The TV portal aggregates the received results (from the one or more Pay TV portals but also from other sources, not shown in figure 5) in action 59 and sends the result to the television (action 62).

In action 61, the television receives and presents the results to the user. If the user selects a PayTV program from the presented results in action 63, the television launches a PayTV application on the CAM in action 64. The CAM application will perform the necessary actions to obtain the relevant content via the PayTV portal (action 65).

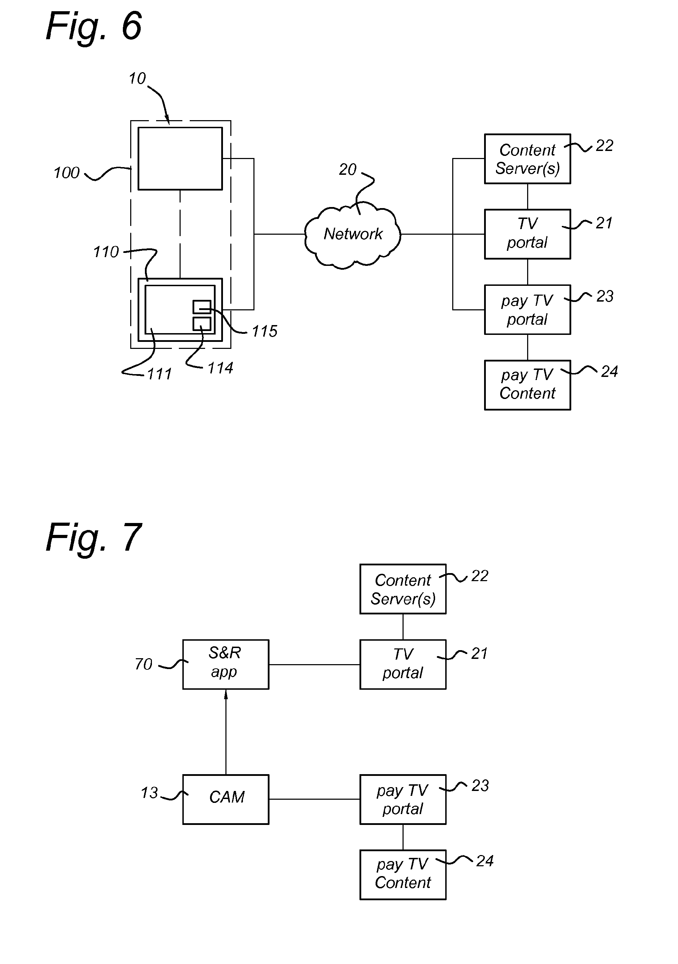

Figure 6 schematically shows a system 100 of a television 10 and associated user device 110 according to an embodiment of the invention. The associated user device 110 can be a portable device such as a dedicated remote control for the television 10, or a portable terminal such as a smart phone, a tablet computer, or laptop computer. The user device comprises a processing unit 114. It may also comprise a network interface 115. Either or, preferably, both the television and the user device may comprise a network interface 15, 115. The user device also has a display unit 111.

The embodiment in which the processing unit 114 which runs the S&R application is comprised in the user device is similar to the embodiments with processing unit 14 in the television 10 as described in reference to figures 2-5. When the S&R application is run on the processing unit 114, the application will fetch the PayTV portal link from the CAM in the television. This can be done via a local network (for example a WiFi network) or via a dedicated link between user device 110 and television 10 (e.g. an infrared or Bluetooth link). It can be done via a SAS resource. The communication between S&R application and TV portal 21 is further identical as disclosed in reference to figures 2-5.

In this embodiment, the aggregated results can be presented on display 111 of the user device 110 or on display 11 of the television or both. The user can make a selection using an appropriate user interface. If the selection is made via the user device, the S&R application on the user device 110 will transmit the necessary details of the selection to the television 10, so that the television 10 can launch an appropriate application for retrieving and displaying the selected content.

In summary, the invention can be practiced in a television 10 according the invention (the application runs on a processor of the television), or in a system comprising a television 10 and an associated user device 110 (the application runs on a processor of the user device and cooperates with the television). Both embodiments are described under the umbrella term of a "television system 100", which can indicate either a television 10 or a television 10 with associated user device 110.

Figure 7 shows an alternative interaction between an application 70 running on processing unit 14 or 114 and the CAM 13. In this alternative, the CAM 13 receives keywords from application 70 and contacts the PayTV portal 23 to perform a search using the keywords. The results are received by the CAM 13 and passed on to the application 70 which aggregates these results with the results from TV portal 21.

In the foregoing examples, reference has been made to communications between a general processing unit 14, 114 and a (by definition) proprietary CAM. The communication can advantageously take place using a standardized Application Programming Interface (API). Communication can take place using a Common Interface Plus (CI-Plus) Specific Application Support (SAS) resource. Communication can also take place through an AMMI application. The AMMI application can be displayed via an AMMI resource.

In the foregoing description of the figures, the invention has been described with reference to specific embodiments thereof. It will, however, be evident that various modifications and changes may be made thereto without departing from the scope of the invention as summarized in the attached claims.

In particular, combinations of specific features of various aspects of the invention may be made. An aspect of the invention may be further advantageously enhanced by adding a feature that was described in relation to another aspect of the invention.

The description focuses on the use of Conditional Access Module. This is not per se required; a television set could also implement a Conditional Access or DRM system. In such a case no module would be present but still the invention can be practiced. An example of this is IPTV over a managed network using an embedded DRM implementation. In that embodiment, the URL for PayTV content may be provided via the TV portal. This URL, which may be by appended by an agreed suffix, can be used to obtain search results from the PayTV portal / content server.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. Television system (10, 100) comprising
- a processing unit (14, 114),
- a network unit (15, 115) for connecting to a digital network (20) such as the internet;
- an interface unit (12), such as a Common Interface module, for connecting with a Conditional Access Module, CAM (13),
**characterized in that** the processing unit (14, 114) is configured to:
- receive search criteria from a user;
- receive a content portal (23) reference from the CAM (13);
- transmit the keywords and the content portal reference to a television, TV, portal (21) via the network (20);
- receive from the TV portal (21) search results, including at least one search result pertaining to content from the content portal (23) and at least one search result pertaining to content from a further content source (22);
- present the aggregated search results on a display (11, 111) of the television system (10, 100).
- in response to a selection by the user of the at least one search result pertaining to content from the content portal (23), retrieve the selected content by launching an application from the CAM (13).

2. Television system (10, 100) according to claim 1, wherein retrieving the selected content comprises launching an Application Man Machine Interface, AMMI, application from the CAM (13).

3. Television system (10, 100) according to claim 1 or 2, wherein the processing unit (14, 114) is configured to receive the content portal reference from the CAM (13) via a Specific Application Support, SAS, resource.

4. Television system (10, 100) according to any of the preceding claims, wherein the processing device (14, 114) is configured to:
- in response to a selection by the user of a search result pertaining to the further content source (22), retrieving the selected content from the further content source (22).

5. Television system (100) according to any of the preceding claims, comprising a television (10) and a user device (110), wherein the user device (110) comprises the processing unit (114).

6. Television system (100) according to claim 5, wherein the user device (110) is configured to connect to the TV (10) for obtaining the content portal (23) reference and for sending the selection by the user.

7. Television system (10, 100) according to any of the preceding claims, wherein the content portal is a PayTV portal.

8. Television, TV, portal (21) configured to:
- receive from a television system (10, 100), over a network (20), search criteria and a content portal (23) reference;
- query the content portal (23) using the search criteria;
- receive results from the content portal (23); and
- send the received results to the television system (10, 100)

9. TV portal (21) of claim 8, further configured to:
- query a further content source (22) using the search criteria;
- receive further results from the further content source; and
- aggregate the further results and the results
- send the aggregated results to the television system (10, 100)

10. User device (110), configured to connect with a television (10), comprising
- a display (111);
- a network interface (115) for connecting to a network (20);
- a processing unit (114),
wherein the processing unit (114) is configured to
- receive from the television system (10) a content portal (23) reference;
- receive, from a user of the user device, search criteria;
- transmit the keywords and the content portal reference to a television, TV, portal (21) via the network (20);
- receive from the TV portal (21) aggregated search results, including at least one search result pertaining to content from the content portal (23);
- present the aggregated search results on the display (111); and
- in response to a selection by the user of the at least one search result pertaining to content from the content portal (23), send a reference to the selected content to the television (10).

11. Computer medium storing computer program instructions, which, when executed on a user device (110), cause the user device to function according to claim 10.
